# EUROPÄISCHE PATENTSCHRIFT

(11) **EP 3 019 789 B1**
(45) Veröffentlichungstag und Bekanntmachung des Hinweises auf die Patenterteilung: **22.01.2020**
(21) Anmeldenummer: 14732567.4
(22) Anmeldetag: 25.06.2014
(51) Int. Cl.: G21K 1/06, G02B 27/00, F21V 8/00

(54) **OPTISCHE HOHLWELLENLEITER-BAUGRUPPE**
OPTICAL HOLLOW WAVEGUIDE ASSEMBLY
ENSEMBLE GUIDE D'ONDE OPTIQUE CREUX

(30) Priorität: 11.07.2013 DE 102013213564
(43) Veröffentlichungstag der Anmeldung: 18.05.2016
(73) Patentinhaber: Carl Zeiss SMT GmbH, 73447 Oberkochen (DE)
(72) Erfinder: SCHMIDT, Stefan, Wolfgang, 73430 Aalen (DE); DEGÜNTHER, Markus, 61197 Florstadt (DE); DAVYDENKO, Vladimir, 76332 Bad Herrenalb (DE)
(74) Vertreter: Rau, Schneck & Hübner Patentanwälte Rechtsanwälte PartGmbB
(86) Internationale Anmeldenummer: PCT/EP2014/063369
(87) Internationale Veröffentlichungsnummer: WO 2015/003903

(56) Entgegenhaltungen:
- JP-A- 2000 176 673
- US-A- 4 120 024
- US-A- 5 276 761
- US-A1- 2005 157 278
- US-A1- 2006 264 167

## Beschreibung

Die Erfindung betrifft eine optische Hohlwellenleiter-Baugruppe. Ferner betrifft die Erfindung eine Beleuchtungsoptik mit einer derartigen Hohlwellenleiter-Baugruppe, ein Beleuchtungs-System mit einer derartigen Beleuchtungsoptik und eine Inspektionsanlage mit einem derartigen Beleuchtungs-System.

Ein Hohlwellenleiter der eingangs genannten Art ist bekannt aus der US 6,552,846 B1. Die JP 2000 176673 A offenbart eine optische Hohlwellenleiter-Baugruppe. Eine Beleuchtungseinrichtung mit optischen Wellenleitern ist beschrieben in der US 4,120,024 A. Die US 2006/0264167 A1 beschreibt einen optischen Hohlwellenleiter, der auch als Teil einer Raumbelüftung genutzt werden kann. Die US 5,276,761 A beschreibt einen optischen Hohlwellenleiter zur Führung von ultravioletter Laserstrahlung. Die US 2005/0157278 A1 beschreibt eine Projektionsbelichtungsanlage,

Ein Hohlwellenleiter kann eines der im Beleuchtungsstrahlengang des Beleuchtungslichts führenden reflektierenden Elemente sein. Der Hohlwellenleiter kann daher einer Kontamination durch eine Beleuchtungslichtquelle und/oder durch Komponenten der weiteren Beleuchtungsoptik ausgesetzt sein.

Es ist eine Aufgabe der vorliegenden Erfindung, eine Hohlwellenleiter-Baugruppe zu schaffen, bei der die Gefahr einer Kontamination des Hohlwellenleiters gering ist.

Diese Aufgabe ist erfindungsgemäß gelöst durch eine Hohlwellenleiter-Baugruppe mit den im Anspruch 1 angegebenen Merkmalen.

Erfindungsgemäß wurde erkannt, dass Gas, z.B. molekularer Wasserstoff, das über die Gasquelle in den Wellenleiter-Hohlraum eingeleitet wird, durch das Beleuchtungslicht zu Radikalen oder zu anderen reaktiven Gasspezies umgesetzt werden kann. Diese reagieren dann mit potentiellen Kontaminationspartikeln im Wellenleiter-Hohlraum bzw. auf einer Hohlraum-Innenwand von diesem. Kontaminationspartikel können insbesondere durch Debris einer Lichtquelle, insbesondere einer EUV-Lichtquelle, gebildet sein. Die reaktive Gasspezies, besonders Wasserstoffionen oder atomarer Wasserstoff, die nachfolgend auch als Radikale bezeichnet werden und die durch das Beleuchtungslicht gebildet werden, sorgen also für eine Dekontaminierung des Wellenleiter-Hohlraums. Das EUV-Nutz- bzw. Beleuchtungslicht generiert somit gleichzeitig das Dekontaminationsmittel, nämlich die reaktiven Gasspezies. Der Hohlwellenleiter kann einen rechteckigen Hohlraum-Innenquerschnitt aufweisen. Bei dem Hohlwellenleiter kann es sich um ein Stabmodul handeln. Es kann sich eine chemisch reduzierende Umgebung über der Hohlraum-Innenwand ergeben, was eine unerwünschte Oxidation der Innenwand und/oder ein unerwünschtes Kohlenstoffwachstum auf der Innenwand insbesondere während der Exposition mit dem Beleuchtungslicht unterbindet. Auch eine anfänglich, z.B. während des Zusammenbaus des Hohlwellenleiters entstandene, Kontamination und/oder Oxidation der Innenflächen kann hierdurch entfernt bzw. reduziert werden, so dass ebenfalls eine Reinigung resultiert. Als Beleuchtungslicht kommt insbesondere EUV-Strahlung im Wellenlängenbereich zwischen 2 nm und 30 nm zum Einsatz. Auch weiche Röntgenstrahlung anderer Wellenlängen, VUV (Vakuumultraviolett)-Strahlung, DUV (tiefes Ultraviolett, deep ultraviolet)-Strahlung oder Beleuchtungslicht, enthaltend Strahlungsanteile verschiedener der vorstehend angegebenen Spektralanteile, kann zum Einsatz kommen. Die Gasquelle kann als Gas Wasserstoff, Stickstoff, Helium, Sauerstoff, Wasserdampf oder eine Mischung aus mindestens zwei dieser Gase bereitstellen. Bei Einsatz von Wasserstoff als mit der Gasquelle zur Verfügung gestelltem Gas und EUV-Strahlung als Beleuchtungslicht erzeugt das EUV-Beleuchtungslicht insbesondere atomaren Wasserstoff, der bei der Dekontamination der reflektierenden Oberflächen des Hohlwellenleiters besonders effektiv ist. Beim Einsatz einer EUV-Lichtquelle kommen aufgrund der sich beim Betrieb typischer EUV-Lichtquellen ergebenden Kontaminationen die Vorteile der Dekontamination über das zugeführte Gas besonders gut zum Tragen.

Eine Ausführung der Baugruppe nach Anspruch 2 lässt sich einfach und mit geringem Änderungsbedarf am optischen Hohlwellenleiter realisieren.

Eine Ausgestaltung nach Anspruch 3 führt zur Möglichkeit, den gesamten Wellenleiter-Hohlraum mit dem Gas aus der Gasquelle zu spülen, was einer Kontamination der Hohlraum-Innenwand weiter vorbeugt. Der mindestens eine Gas-Einlass kann mittig zwischen dem Beleuchtungslicht-Einlass und dem Beleuchtungslicht-Auslass angeordnet sein. Auch eine andere Anordnung ist möglich. Es können auch mehrere Gas-Einlässe vorgesehen sein. Diese können auf gleicher Höhe zwischen dem Beleuchtungslicht-Auslass und dem Beleuchtungslicht-Einlass oder auch längs des Wellenleiters beabstandet angeordnet sein.

Eine Einmündung nach Anspruch 4 führt zu einer im Vergleich zum sonstigen Einlass vorteilhaft kleinen Einmündungsöffnung in den Wellenleiter-Hohlraum. Es geht dann wenig Reflexionsfläche der Hohlraum-Innenwand durch die Einmündung verloren.

Ein Einmündungsquerschnitt nach Anspruch 5 hat sich als ausreichend klein herausgestellt. Der Einmündungsquerschnitt kann auch noch kleiner sein und kann max. 500 µm² betragen oder auch noch kleiner sein.

Eine Ausgestaltung mit mindestens einem Überdruck-Teilraum nach Anspruch 6 reduziert die Anforderungen an die Menge des zuzuführenden Gases. Auch die Anforderungen an die Abführung austretenden Gases oder erzeugter Reaktionsprodukte, z.B. erzeugter Kohlenwasserstoffe, sind dann reduziert.

Zwei Überdruck-Teilräume nach Anspruch 7 haben sich als besonders geeignet herausgestellt. Die Überdruck-Teilräume sind dann dem Beleuchtungslicht-Einlass bzw. dem Beleuchtungslicht-Auslass nahe angeordnet, wenn der Abstand des jeweiligen Überdruck-Teilraums zum nahegelegenen Einlass bzw. Auslass weniger als ein Fünftel des Abstandes zum gegenüberliegenden Auslass bzw. Einlass beträgt. Auch ein noch geringeres Abstandsverhältnis, beispielsweise ein Zehntel, ein Zwanzigstel oder ein noch geringeres Abstandsverhältnis ist möglich.

Die Vorteile einer Beleuchtungsoptik nach Anspruch 8, eines Beleuchtungs-Systems nach Anspruch 9 und einer Inspektionsanlage nach Anspruch 10 entsprechen denen, die vorstehend unter Bezugnahme auf die erfindungsgemäße Hohlwellenleiter-Baugruppe bereits erläutert wurden.

Bei der Lichtquelle des Beleuchtungs-Systems kann es sich um eine EUV-Lichtquelle zur Erzeugung von EUV-Beleuchtungslicht handeln.

Bei der Inspektionsanlage kann es sich um eine Maskeninspektionsanlage und/oder um eine Waferinspektionsanlage handeln.

Die Lichtquelle des Beleuchtungs-Systems kann EUV-Beleuchtungslicht in einer Wellenlänge im Bereich zwischen 2 nm und 30 nm erzeugen. Bei der Beleuchtungsoptik kann es sich um eine insgesamt katoptrische Optik, also um eine reine Spiegeloptik handeln.

Ausführungsbeispiele der Erfindung werden nachfolgend anhand der Zeichnungen näher erläutert. Diese zeigen:
- Fig. 1: Eine perspektivische Ansicht eines optischen Hohlwellenleiters zur Führung von EUV-Beleuchtungslicht;
- Fig. 2: eine EUV-Hohlwellenleiter-Baugruppe mit dem Hohlwellenleiter nach Fig. 1 in einem Längsschnitt, wobei zudem Komponenten einer Wasserstoffquelle der Baugruppe dargestellt sind, die mit einem Wellenleiter-Hohlraum des Hohlwellenleiters in Fluidverbindung steht;
- Fig. 3: in einer zu Fig. 2 ähnlichen Darstellung eine weitere Ausführung einer EUV-Hohlwellenleiter-Baugruppe; und
- Fig. 4: schematisch eine Inspektionsanlage mit einem EUV-Beleuchtungs-System mit einer EUV-Beleuchtungsoptik mit einer EUV-Hohlwellenleiter-Baugruppe.

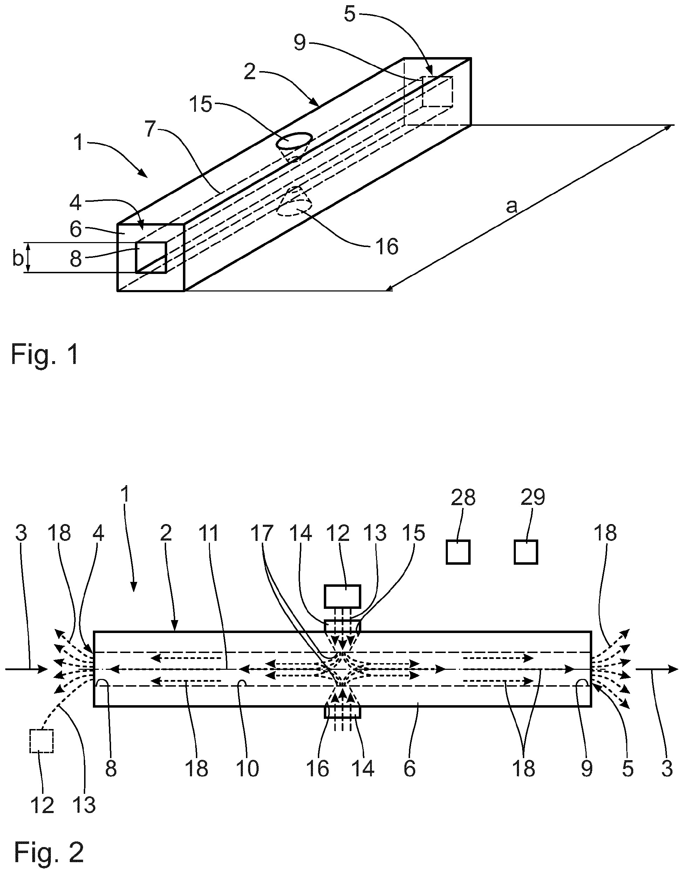

Fig. 1 und 2 zeigen eine erste Ausführung einer EUV-Hohlwellenleiter-Baugruppe 1. Diese hat einen in der Fig. 1 perspektivisch dargestellten optischen Hohlwellenleiter 2 zur Führung von EUV-Beleuchtungslicht 3. Letzteres wird, was in der Fig. 2 äußerst schematisch dargestellt ist, in den Hohlwellenleiter 2 über einen Eintrittsbereich 4 eingekoppelt und über einen Austrittsbereich 5 ausgekoppelt. Der Hohlwellenleiter 2 hat einen rohrförmigen Grundkörper 6 mit einem durchgehenden Wellenleiter-Hohlraum 7. Ein Querschnitt des Hohlraums 7 ist quadratisch mit Seitenlänge b. Alternativ kann der Querschnitt des Hohlraums 7 auch rechteckig mit unterschiedlich langen Seitenlängen ausgeführt sein. Die Länge des Grundkörpers 6 zwischen dem Eintrittsbereich 4 und dem Austrittsbereich 5 ist in der Fig. 1 mit a bezeichnet. b kann im Bereich von 2 mm liegen. Eine resultierende Querschnittsfläche für den Hohlraum 7, also auch für den Eintrittsbereich 4 und den Austrittsbereich 5, kann im Bereich zwischen 0,04 mm² bis 10 mm² liegen. a kann im Bereich von 500 mm liegen.

Der Wellenleiter-Hohlraum 7 hat einen Beleuchtungslicht-Einlass 8 im Eintrittsbereich 4 und einen Beleuchtungslicht-Auslass 9 im Austrittsbereich 5.

Eine Hohlraum-Innenwand 10 des Wellenleiter-Hohlraums 7 ist für das Beleuchtungslicht 3 unter streifendem Einfall hochreflektierend ausgeführt. Eine Reflektivität der Hohlraum-Innenwand 10 für das Beleuchtungslicht 3 unter streifendem Einfall ist größer als 90 % und kann größer sein als 95 %, größer sein als 97 %, größer sein als 98 %, größer sein als 99 % und kann auch größer sein als 99,5 %. Ein Akzeptanzwinkel, unter dem das Beleuchtungslicht 3, abweichend von einer Längsachse 11 im Hohlraum 7 geführt wird, kann im Bereich zwischen 2° und 3° liegen. Dieser Akzeptanzwinkel entspricht dann einer Divergenz des aus dem Auslass 9 austretenden Bündels des Beleuchtungslichts 3.

Eine maximale Anzahl N der Reflexionen des Beleuchtungslichts 3 an der Innenwand 10 kann im Bereich von 9 liegen. Auch eine andere Anzahl ist möglich, beispielsweise 0<N<12.

Teil der Hohlwellenleiter-Baugruppe 1 ist eine Wasserstoffquelle 12. Letztere steht über einem Zuführleitungsabschnitt 13 und eine Ringleitung 14 mit zwei Wasserstoff-Einlässen 15, 16 des Grundkörpers in Fluidverbindung. Die beiden Einlässe 15, 16 stehen mit dem Wellenleiter-Hohlraum 7 in Fluidverbindung. Die Ringleitung 14 erstreckt sich in Umfangsrichtung um die Längsachse 11 um den Grundkörper 6 zwischen den Wasserstoff-Einlässen 15 und 16.

Bei einer nicht dargestellten Ausführung des Hohlwellenleiters 2 kann dieser auch nur genau einen Wasserstoff-Einlass oder auch mehr als zwei Wasserstoff-Einlässe haben.

Die Wasserstoff-Einlässe 15, 16 münden mittig zwischen dem Beleuchtungslicht-Einlass 4 und dem Beleuchtungslicht-Auslass 5 in den Wellenleiter-Hohlraum 7 ein.

Eine Einmündung 17 der Wasserstoff-Einlässe 15, 16 ist konisch sich zum Wellenleiter-Hohlraum verjüngend ausgebildet. Ein Einmündungsquerschnitt der Einmündungen 17 ist kleiner als 1 mm². Der Einmündungsquerschnitt der Wasserstoff-Einlässe 15, 16 in den Wellenleiter-Hohlraum 7 kann auch kleiner sein und beispielsweise 500 µm² betragen.

Die Hohlwellenleiter-Baugruppe 1 wird folgendermaßen betrieben: Beim Führen des Beleuchtungslichts 3 durch den Wellenleiter-Hohlraum 7 wird über die Wasserstoff-Einlässe 15, 16 molekularer Wasserstoff H₂ in den Wellenleiter-Hohlraum eingeleitet. Dieser molekulare Wasserstoff verteilt sich im gesamten Wellenleiter-Hohlraum 7 und wechselwirkt mit dem EUV-Beleuchtungslicht 3, wodurch Wasserstoff-Radikale gebildet werden. Diese reagieren mit ggf. sich an der Innenwand 10 niedergeschlagenen Kohlenstoff-Partikeln zu Kohlenwasserstoffen CₓH_{y}. Durch den Überdruck im Wellenleiter-Hohlraum 7 aufgrund des einströmenden WasserstoffGases werden die gebildeten Kohlenwasserstoffe CₓH_{y} aus dem Wellenleiter-Hohlraum 7 ausgeblasen, wie in der Fig. 2 durch Richtungspfeile 18 angedeutet. Über die Wasserstoffquelle 12 erfolgt also eine Wasserstoff-Spülung des Wellenleiter-Hohlraums 7. Die ausgeblasenen Kohlenwasserstoffe CₓH_{y} können dann kontrolliert abgesaugt und entsorgt werden. Auf diese Weise erfolgt eine Dekontamination der Innenwand 10, deren hohe Reflektivität für das EUV-Beleuchtungslicht 3 erhalten bleibt.

Zudem ergibt sich über die mittige Einleitung des molekularen Wasserstoffs eine stetige Spülung des gesamten Wellenleiter-Hohlraums 7, was einer Kontamination entgegenwirkt.

Bei einer gestrichelt dargestellten Ausführung steht die Wasserstoffquelle 12 mit dem Zuführleitungsabschnitt 13 direkt mit dem Beleuchtungslicht-Einlass 8 in Fluidverbindung.

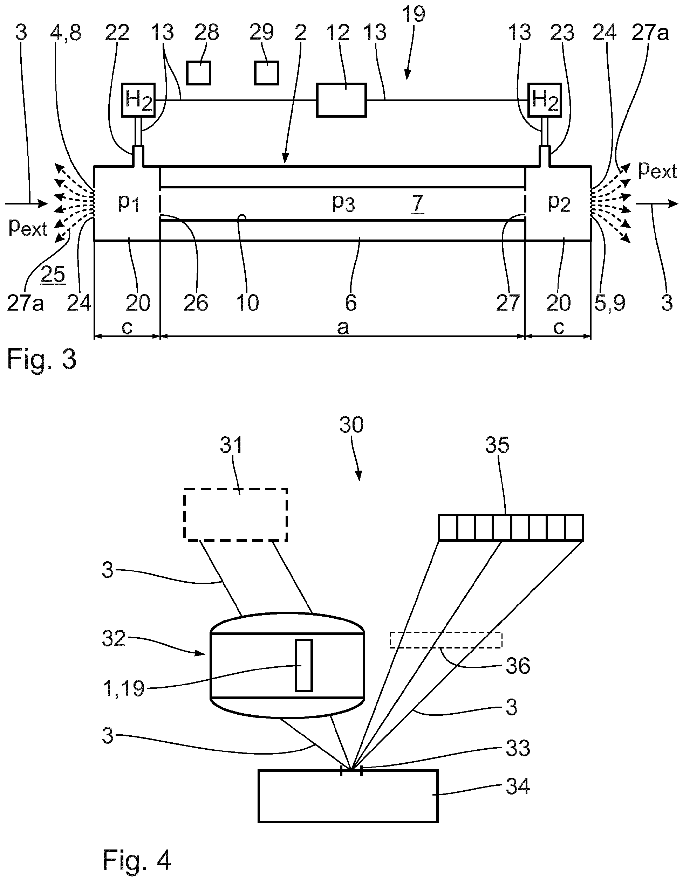

Anhand der Fig. 3 wird nachfolgend eine weitere Ausführung einer EUV-Hohlwellenleiter-Baugruppe 19 beschrieben. Komponenten, die denjenigen entsprechen, die vorstehend unter Bezugnahme auf die Ausführung nach den Fig. 1 und 2 bereits erläutert wurden, tragen die gleichen Bezugsziffern und werden nicht nochmals im Einzelnen diskutiert.

Der Hohlwellenleiter 2 der Baugruppe 19 hat im Eintrittsbereich 4 einerseits und im Austrittsbereich 5 andererseits jeweils einen Überdruck-Teilraum 20, 21, wobei sich der Wellenleiter-Hohlraum 7 zwischen den beiden Überdruck-Teilräumen 20, 21 erstreckt. Die Überdruck-Teilräume 20, 21 haben in Längsrichtung des Hohlwellenleiters 2 jeweils eine Erstreckung, die in der Fig. 3 mit c bezeichnet ist. c/a kann im Bereich von 1/3 liegen.

In jeden der Überdruck-Teilräume 20, 21 mündet ein Wasserstoff-Einlass 22, 23. Diese Einlässe 22, 23 stehen jeweils über Zuführleitungsabschnitte 13 mit einer Wasserstoffquelle 12 in Fluidverbindung.

Über Druckminderungsöffnungen 24 im Bereich des Einlasses 8 und des Auslasses 9 stehen die Überdruck-Teilräume 20, 21 des Wellenleiter-Hohlraums 7 mit einer Umgebung 25 des Hohlwellenleiters 2 in Fluidverbindung.

Beim Betrieb der Baugruppe 19 wird das Beleuchtungslicht 3, wie vorstehend im Zusammenhang mit der Ausführung nach den Fig. 1 und 2 bereits erläutert, im Wellenleiter-Hohlraum 7 geführt. Gleichzeitig wird über die Wasserstoffquelle12, die Zuführleitungsabschnitte 13 und die Wasserstoff-Einlässe 22, 23 molekularer Wasserstoff H₂ in die beiden Überduck-Teilräume 20, 21 und über Durchtrittsöffnungen 26, 27 in den Abschnitt des Wellenleiter-Hohlraums 7 zwischen den Teilräumen 20, 21 eingeleitet. In den Überdruck-Teilräumen 20, 21 herrscht dabei ein Druck p₁, p₂. Im zwischenliegenden Wellenleiter-Hohlraum 7 stellt sich ein Druck p₃ ein. Die Durchtrittsöffnungen 26, 27 sind so ausgelegt, dass in guter Näherung gilt: p₁ = p₂ = p₃. Weiterhin gilt, dass dieser Druck größer ist als der Druck in der Umgebung 25, pₑₓₜ. Es können auch gezielt kleine Druckunterschiede zwischen den Drücken p₁, p₂ und p₃ im Bereich kleiner 10 Pa, beispielsweise in der Größenordnung 1 Pa, vorgegeben werden. Hierdurch können gezielt kleine Transportflüsse im Hohlwellenleiter 2 generiert werden. Über diese kleinen Transportflüsse können Kontaminationen aus dem Hohlwellenleiter 2 abtransportiert werden. Der Überdruck der Drücke p₁, p₂ und p₃ relativ zur Umgebung 25, also relativ zu pₑₓₜ, ist größer als 1 Pa und ist bevorzugt größer als 10 Pa.

Dieser Überdruck führt dazu, dass über die Weglänge a + 2c ein Transmissionsverlust für das EUV-Beleuchtungslicht 3 zwischen den Druckminderungsöffnungen 24 und 25 kleiner ist als 5 % und bevorzugt kleiner ist als 2 %. Im Wellenleiter-Hohlraum 7 herrscht stets ein Überdruck über dem Druck der Umgebung 25, sodass wiederum das EUV-Beleuchtungslicht 3 mit ggf. an der Innenwand 10 abgelagerten Kohlenstoffpartikeln zu Kohlenwasserstoffen CₓH_{y} reagieren kann, wobei aufgrund des Überdrucks diese Kohlenwasserstoffe in die Umgebung 25 abtransportiert und dort abgesaugt bzw. in sonstiger Weise entsorgt werden können.

Der vorliegende Überdruck im Hohlraum 7 sorgt zudem dafür, dass eine stete Spülung des Wellenleiter-Hohlraums 7 erfolgt, was einer Kontamination zusätzlich entgegenwirkt. Es liegt ein steter Gasstrom durch die Druckminderungsöffnungen 24 nach außen in die Umgebung 25 vor, was durch Richtungspfeile 27a in der Fig. 3 verdeutlicht ist.

Nach Beendigung eines Betriebs der Baugruppe 1 bzw. 19 kann über ein Mehrwege-Ventil in den Zuführleitungsabschnitten 13 zunächst aus einer Stickstoffquelle 28 Stickstoff dem Wellenleiter-Hohlraum 7 zugeführt werden und anschließend über eine weitere Quelle 29 extra reine trockene Luft (extra clean dry air, XCDA) dem Wellenleiter-Hohlraum 7 zugeführt werden. Während dieses Belüftungsvorgangs wird, beispielsweise durch eine Drucküberwachung, sicher gestellt, dass der Überdruck im Wellenleiter-Hohlraum und in den Überdruck-Teilräumen 20, 21 immer größer bleibt als der Druck in der Umgebung 25.

Eine Leitungsverbindung der Quellen 28, 29 mit dem Zuführleitungsabschnitt 13 ist in den Fig. 2 und 3 nicht dargestellt.

Die Baugruppen 1 bzw. 19 sind Bestandteil einer Inspektionsanlage 30, die in der Fig. 4 äußerst schematisch dargestellt ist. Die Inspektionsanlage 30 umfasst eine Lichtquelle 31 für das EUV-Beleuchtungslicht 3. Die Lichtquelle 31 kann das EUV-Beleuchtungslicht 3, also EUV-Nutzstrahlung, in einem Wellenlängenbereich 2 nm und 30 nm, beispielsweise im Bereich zwischen 2,3 nm und 4,4 nm oder im Bereich zwischen 5 nm und 30 nm, erzeugen. Für die Lichtquelle 31 kommen die auch für EUV-Lithografiesysteme bzw. Projektionsbelichtungsanlagen üblichen Lichtquellen in Frage, also beispielsweise Laser-Plasma-Quellen (LPP; Laser Produced Plasma) oder auch Entladungsquellen (DPP; Discharge Produced Plasma).

Geführt wird das Beleuchtungslicht 3 in der Inspektionsanlage 30 durch eine Beleuchtungsoptik 32, zu der die Baugruppe 1 bzw. 19 als Bestandteil gehört. Eine Führung des Beleuchtungslichts 3 kann beispielsweise so erfolgen, wie in der US 6,552,846 B1, Fig. 8, beschrieben. Mit der Beleuchtungsoptik 32 wird das Beleuchtungslicht 3 hin zu einem Beleuchtungsfeld 33 auf einem zu inspizierenden Objekt 34, beispielsweise einem Retikel oder einem Wafer, gelenkt. Das Retikel 34 reflektiert das Beleuchtungslicht 3 hin zu einer Detektionseinrichtung 35 der Inspektionsanlage 30. Was die Komponenten, die über die Baugruppe 1 bzw. 19 hinaus gehen, angeht, kann die Inspektionsanlage 30 so ausgeführt sein, wie beispielsweise in der WO 2012/079 723 A1, in der US 2012/0140454 A1 oder in der US 2012/0127566 A1 beschrieben. Zwischen dem Retikel 34 und der Detektionseinrichtung 35 kann eine das Beleuchtungslicht 3 führende Optik 36, beispielsweise eine abbildende Optik angeordnet sein.

Alternativ kann die Baugruppe 1 bzw. 19 Bestandteil einer Projektionsbelichtungsanlage für die EUV-Projektionslitografie sein. Eine derartige Projektionsbelichtungsanlage ist beispielsweise beschreiben in der US 2012/0147347 A1.

Die vorstehenden Ausführungsbeispiele bezogen sich jeweils auf EUV-Hohlwellenleiter-Baugruppen und auf Wasserstoff als einzusetzendes Gas. Es ist klar, dass entsprechende Hohlwellenleiter-Baugruppen auch für andere Beleuchtungslicht-Wellenlängen ausgelegt werden können, beispielsweise für den VUV-, den DUV-Wellenlängenbereich oder für Beleuchtungslicht aus mehreren dieser Wellenlängenbereiche. Anstelle einer EUV-Lichtquelle kommt dann eine entsprechende Lichtquelle für den anderen Wellenlängenbereich oder die anderen Wellenlängenbereiche zum Einsatz. Auch ein Einsatz anderer Gase, z.B. Stickstoff, Helium, Sauerstoff, Wasserdampf oder der Einsatz einer Mischung von mindestens zwei dieser Gase ist möglich.

## Patentansprüche

1. Optische Hohlwellenleiter-Baugruppe (1; 19)
- mit einem optischen Hohlwellenleiter (2) zur Führung von Beleuchtungslicht (3),
-- mit einem rohrförmigen Grundkörper (6) mit einem durchgehenden Wellenleiter-Hohlraum (7) mit einem Beleuchtungslicht-Einlass (8) und einem Beleuchtungslicht-Auslass (9),
-- wobei eine Hohlraum-Innenwand (10) des Wellenleiter-Hohlraums (7) für das Beleuchtungslicht (3) unter streifendem Einfall hochreflektierend ausgebildet ist,
- mit einer Gasquelle (12) zur Bereitstellung eines Gases, die mit dem Wellenleiter-Hohlraum (7) in Fluidverbindung (13) steht,
- **dadurch gekennzeichnet, dass** die Gasquelle (12) so ausgeführt ist, dass hierdurch das Gas in den Wellenleiter-Hohlraum (7) eingeleitet wird, wobei das Gas unter Beleuchtungslicht-Einwirkung ein Dekontaminationsmittel zur Dekontaminierung des Wellenleiter-Hohlraums bildet.

2. Hohlwellenleiter-Baugruppe nach Anspruch 1, **dadurch gekennzeichnet, dass** die Gasquelle (12) über den Beleuchtungslicht-Einlass (8) oder den Beleuchtungslicht-Auslass (9) mit dem Wellenleiter-Hohlraum (7) in Fluidverbindung steht.

3. Hohlwellenleiter-Baugruppe nach Anspruch 1, **dadurch gekennzeichnet, dass** die Gasquelle (12) über mindestens einen Gas-Einlass (15, 16) mit dem Wellenleiter-Hohlraum (7) in Fluidverbindung steht, wobei der Gas-Einlass (15, 16) zwischen dem Beleuchtungslicht-Einlass (8) und dem Beleuchtungslicht-Auslass (9) in den Wellenleiter-Hohlraum (7) einmündet.

4. Hohlwellenleiter-Baugruppe nach Anspruch 3, **dadurch gekennzeichnet, dass** eine Einmündung (17) des mindestens einen Gas-Einlasses (15, 16) sich konisch zum Wellenleiter-Hohlraum (7) verjüngend ausgebildet ist.

5. Hohlwellenleiter-Baugruppe nach Anspruch 3 oder 4, **dadurch gekennzeichnet, dass** ein Einmündungsquerschnitt des Gas-Einlasses (15, 16) in den Wellenleiter-Hohlraum (7) kleiner ist als 1 mm².

6. Hohlwellenleiter-Baugruppe nach einem der Ansprüche 1 bis 5, **gekennzeichnet durch** mindestens einen Überdruck-Teilraum (20, 21) des Wellenleiter-Hohlraums (7), in den mindestens ein Gas-Einlass (22, 23) einmündet, der mit der Gasquelle (12) in Fluidverbindung (13) steht, wobei der mindestens eine Überdruck-Teilraum (20, 21) über mindestens eine Druckminderungsöffnung (24) mit der Umgebung (25) des Hohlwellenleiters (2) so in Verbindung steht, dass bei Zuführung von Gas über die Gasquelle (12) in den mindestens einen Überdruck-Teilraum (20, 21) dort ein Druck (p₁, p₂) herrscht, der größer ist als der Umgebungsdruck (pₑₓₜ).

7. Hohlwellenleiter-Baugruppe nach Anspruch 6, **gekennzeichnet durch** zwei Überdruck-Teilräume (20, 21), die jeweils nahe dem Beleuchtungslicht-Einlass (8) und nahe dem Beleuchtungslicht-Auslass (9) angeordnet sind.

8. Beleuchtungsoptik (32) mit einer Hohlwellenleiter-Baugruppe (1; 19) nach einem der Ansprüche 1 bis 7.

9. Beleuchtungs-System mit einer Beleuchtungsoptik nach Anspruch 8 und einer Lichtquelle.

10. Inspektionsanlage (30) mit einem Beleuchtungs-System nach Anspruch 9.

## Claims

1. Optical hollow waveguide assembly (1; 19)
- comprising an optical hollow waveguide (2) for guiding illumination light (3),
-- comprising a tube-shaped main body (6) with a continuous waveguide cavity (7) having an illumination light inlet (8) and an illumination light outlet (9),
-- wherein a cavity inner wall (10) of the waveguide cavity (7) is designed to be highly reflective for the illumination light (3) under grazing incidence,
- comprising a gas source (12) for providing a gas, which gas source has a fluid connection (13) to the waveguide cavity (7),
**characterized in that** the gas source (12) is configured in such a way that the gas is introduced into the waveguide cavity (7) as a result thereof, wherein the gas, under the action of illumination light, forms a decontamination means for decontaminating the waveguide cavity.

2. Hollow waveguide assembly according to Claim 1, **characterized in that** the gas source (12) has a fluid connection to the waveguide cavity (7) by way of the illumination light inlet (8) or the illumination light outlet (9).

3. Hollow waveguide assembly according to Claim 1, **characterized in that** the gas source (12) has a fluid connection to the waveguide cavity (7) by way of at least one gas inlet (15, 16), wherein the gas inlet (15, 16) opens into the waveguide cavity (7) between the illumination light inlet (8) and the illumination light outlet (9).

4. Hollow waveguide assembly according to Claim 3, **characterized in that** an opening (17) of the at least one gas inlet (15, 16) has an embodiment that tapers conically toward the waveguide cavity (7).

5. Hollow waveguide assembly according to Claim 3 or 4, **characterized in that** an opening cross section of the gas inlet (15, 16) into the waveguide cavity (7) is less than 1 mm².

6. Hollow waveguide assembly according to one of Claims 1 to 5, **characterized by** at least one positive pressure portion (20, 21) of the waveguide cavity (7), into which at least one gas inlet (22, 23) which has a fluid connection (13) to the gas source (12) opens, wherein the at least one positive pressure portion (20, 21) is connected to the surroundings (25) of the hollow waveguide (2) by way of at least one pressure reduction opening (24) in such a way that, when gas is supplied by way of the gas source (12) to the at least one positive pressure portion (20, 21), a pressure (p₁, p₂), which is greater than the surrounding pressure (pₑₓₜ), is prevalent therein.

7. Hollow waveguide assembly according to Claim 6, **characterized by** two positive pressure portions (20, 21) which are respectively arranged close to the illumination light inlet (8) and close to the illumination light outlet (9).

8. Illumination optical unit (32) comprising a hollow waveguide assembly (1; 19) according to one of Claims 1 to 7.

9. Illumination system comprising an illumination optical unit according to Claim 8 and a light source.

10. Inspection apparatus (30) comprising an illumination system according to Claim 9.

## Revendications

1. Sous-ensemble guide d'ondes creux (1 ; 19) optique
- comprenant un guide d'ondes creux (2) optique destiné à guider de la lumière d'éclairage (3),
-- comprenant un corps de base (6) de forme tubulaire pourvu d'un espace creux de guide d'ondes (7) continu ayant une entrée de lumière d'éclairage (8) et une sortie de lumière d'éclairage (9),
-- une paroi interne d'espace creux (10) de l'espace creux de guide d'ondes (7) étant configurée hautement réfléchissante pour la lumière d'éclairage (3) sous une incidence rasante,
- comprenant une source de gaz (12) destinée à fournir un gaz qui se trouve en liaison fluidique (13) avec l'espace creux de guide d'ondes (7),
**caractérisé en ce que**
la source de gaz (12) est réalisée de telle sorte que le gaz est injecté par le biais de celle-ci dans l'espace creux de guide d'ondes (7), le gaz formant, sous l'effet de la lumière d'éclairage, un agent décontaminant destiné à la décontamination de l'espace creux de guide d'ondes.

2. Sous-ensemble guide d'ondes creux selon la revendication 1, **caractérisé en ce que** la source de gaz (12) se trouve en liaison fluidique avec l'espace creux de guide d'ondes (7) par le biais de l'entrée de lumière d'éclairage (8) ou de la sortie de lumière d'éclairage (9) .

3. Sous-ensemble guide d'ondes creux selon la revendication 1, **caractérisé en ce que** la source de gaz (12) se trouve en liaison fluidique avec l'espace creux de guide d'ondes (7) par le biais d'au moins une entrée de gaz (15, 16), l'entrée de gaz (15, 16) débouchant dans l'espace creux de guide d'ondes (7) entre l'entrée de lumière d'éclairage (8) et la sortie de lumière d'éclairage (9).

4. Sous-ensemble guide d'ondes creux selon la revendication 3, **caractérisé en ce qu'**un débouché (17) de l'au moins une entrée de gaz (15, 16) est configuré pour se rétrécir en forme conique vers l'espace creux de guide d'ondes (7).

5. Sous-ensemble guide d'ondes creux selon la revendication 3 ou 4, **caractérisé en ce qu'**une section transversale de débouché de l'entrée de gaz (15, 16) dans l'espace creux de guide d'ondes (7) est inférieure à 1 mm².

6. Sous-ensemble guide d'ondes creux selon l'une des revendications 1 à 5, **caractérisé par** au moins un espace partiel de surpression (20, 21) de l'espace creux de guide d'ondes (7), dans lequel débouche au moins une entrée de gaz (22, 23), qui se trouve en liaison fluidique (13) avec la source de gaz (12), l'au moins un espace partiel de surpression (20, 21) se trouvant en liaison avec l'environnement (25) du guide d'ondes creux (2) par le biais d'au moins une ouverture de réduction de pression (24) de telle sorte que lors de l'acheminement de gaz par le biais de la source de gaz (12) dans l'au moins un espace partiel de surpression (20, 21), il y règne une pression (p₁, p₂) qui est supérieure à la pression environnante (pₑₓₜ).

7. Sous-ensemble guide d'ondes creux selon la revendication 6, **caractérisé par** deux espaces partiels de surpression (20, 21) qui sont respectivement disposés à proximité de l'entrée de lumière d'éclairage (8) et à proximité de la sortie de lumière d'éclairage (9).

8. Optique d'éclairage (32) comprenant un sous-ensemble guide d'ondes creux (1 ; 19) selon l'une des revendications 1 à 7.

9. Système d'éclairage comprenant une optique d'éclairage selon la revendication 8 et une source de lumière.

10. Équipement d'inspection (30) comprenant un système d'éclairage selon la revendication 9.
